# DEMANDE DE BREVET EUROPEEN

(11) **EP 1 311 054 A1**
(43) Date de publication de la demande: **14.05.2003**
(21) Numéro de dépôt: 01204324.6
(22) Date de dépôt: 13.11.2001
(51) Int. Cl.: H02K 21/16, H02K 1/27

(54) **Transducteur électromécanique à aimants permanents bipolaires**

(71) Demandeur: Eta SA Fabriques d'Ebauches, 2540 Grenchen (CH)
(72) Inventeur: Taghezout, Daho, 1110 Morges (CH)
(74) Mandataire: Barbeaux, Bernard

(57) **Abrégé**

Le transducteur électromécanique comporte un rotor (R) présentant 2N pôles magnétiques de polarité alternée disposé à périphérie de ce rotor, N étant un nombre entier supérieur ou égal à 2, et un stator (S) comprenant au moins deux parties polaires couplées magnétiquement à une bobine et présentant des dents statoriques (7, 8) disposées circulairement autour de l'axe de rotation (X-X) du rotor.

Conformément à l'invention les 2N pôles magnétiques du rotor sont engendrés par N aimants permanents bipolaires (19) portés par ce rotor, répartis autour de son axe de rotation et ayant tous des axes d'aimantation (A) orientés dans un même sens par rapport à cet axe.

## Description

La présente invention a pour objet un nouveau transducteur électromécanique à aimants permanents bipolaires qui peut être utilisé soit comme générateur de courant, soit comme moteur.

Comme cela apparaîtra par la suite, l'invention est particulièrement avantageuse dans le cas de transducteurs de petites dimensions et de faible consommation énergétique, mais cela n'exclut évidemment pas son application à d'autres appareils comme, par exemple, en tant que moteur, pour l'entraînement de disques, de bobines ou de cassettes dans les domaines informatique et audiovisuel ou celui d'aiguilles de compteurs de tours ou de vitesse dans des véhicules automobiles.

L'une des applications les plus intéressantes de l'invention est celle des pièces d'horlogerie de petit volume comme les montres ou les mouvements de montres à affichage analogique où le nouveau transducteur peut être employé à la fois comme générateur de courant et comme moteur pour l'entraînement d'aiguilles assurant un tel affichage.

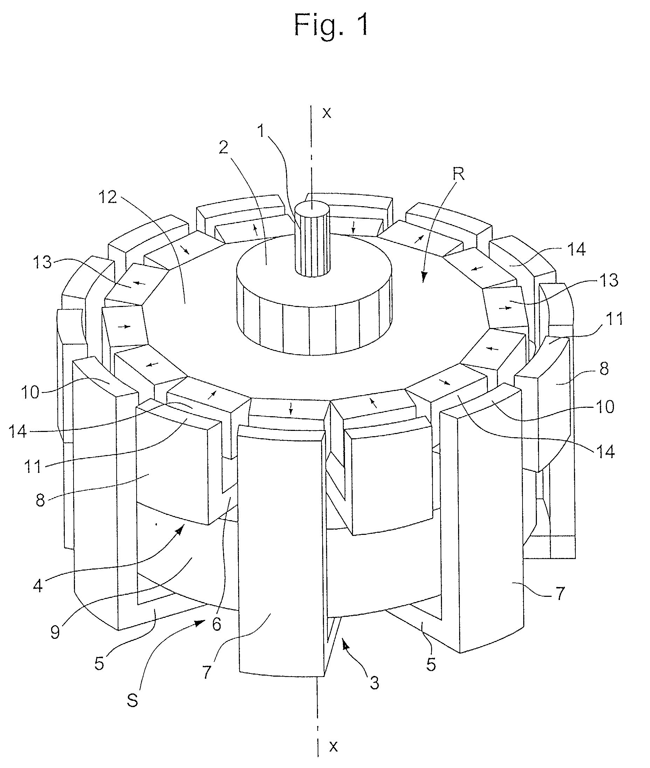

La figure 1 des dessins annexés montre un générateur monophasé connu et déjà utilisé dans des montres électromécaniques où il est entraîné par un couple moteur provenant d'un mécanisme comprenant une masse oscillante actionnée par les mouvements du porteur.

Le générateur comprend un stator S et un rotor R monté rotatif autour d'un axe X-X, par rapport au stator S d'une manière appropriée, non représentée sur la figure. Le rotor R comprend un arbre 1, en matériau amagnétique, par exemple en plastique, présentant un pignon 2 par lequel il peut être entraîné par le mécanisme à masse oscillante également non représenté.

Le stator S comprend deux pièces polaires 3 et 4 en matériau magnétique doux, comprenant chacune une partie en forme d'anneau circulaire plan qui n'est pas visible sur la figure 1 et qui est couplé mécaniquement et magnétiquement à un noyau de bobine cylindrique réalisé également en matériau magnétique doux et qui n'est pas non plus visible sur cette figure. De la partie centrale de chaque pièce polaire 3, 4 partent sept bras radiaux 5, respectivement 6, qui sont régulièrement répartis autour d'elle et qui sont repliés à leurs extrémités libres pour former une série de sept dents statoriques 7, respectivement 8, parallèles à l'axe X-X et disposées selon un cercle centré sur cet axe. De plus, les deux pièces polaires 3, 4 sont décalées angulairement l'une par rapport à l'autre de façon que leurs dents 7, 8 soient alternées et écartées l'une de l'autre dans la direction de l'axe X-X pour permettre à une bobine 9 d'être logée entre elles et autour du noyau cylindrique non représenté. Par ailleurs, la longueur des dents statoriques 7, 8 des deux pièces polaires est telle que leurs extrémités 10, 11 se trouvent toutes sensiblement dans un même plan perpendiculaire à l'axe X-X.

En ce qui concerne le rotor R, celui-ci comprend un flasque 12 en matériau ferromagnétique de haute perméabilité magnétique comme ceux connus sous les marques "Megaperm" ou Permenorm". Ce flasque 12 a la forme d'un prisme droit et plat présentant quatorze faces latérales sur lesquelles sont collés par l'une de leurs grandes faces quatorze aimants permanents bipolaires 13 ayant chacun la forme d'un parallélépipède rectangle dont la longueur est sensiblement égale à la largeur des faces latérales du flasque.

Les axes d'aimantation des aimants 13, qui sont symbolisés par des flèches sans référence sur la figure 1, ont tous une direction radiale mais leurs sens sont alternés. Les aimants 13 présentent donc à la périphérie du rotor R quatorze pôles magnétiques alternativement Nord et Sud, qui définissent avec les quatorze dents 7, 8 du stator auxquelles ils font face autant d'entrefers 14 dans lesquels ils produisent des champs magnétiques radiaux alternés.

Pour les générateurs de petites dimensions de ce type, comme celui qui est représenté sur la figure 1, le prix de revient est fixé en grande partie par le coût du rotor qui est dû essentiellement à celui des aimants. Actuellement, ces aimants sont fournis déjà magnétisés par des fabricants spécialisés et assemblés avec le flasque par des sociétés horlogères qui réalisent elles-mêmes le générateur avant de l'inclure dans un mouvement ou dans une montre terminée. Or cet assemblage qui se fait actuellement par collage est très délicat du fait de la petitesse des aimants et de l'alternance de leurs polarités. De plus, le risque de formation d'entrefers trop importants et nocifs au niveau du collage entre les aimants et le flasque doit être minimisé. Il y a donc lors de cette opération d'assemblage beaucoup de déchets.

L'un des but de la présente invention est de fournir une solution pour réduire dans une large mesure le coût de tels générateurs, d'une part, en limitant l'importance des déchets lors du montage des aimants sur les flasques et, d'autre part, en permettant aux fabricants de ces générateurs de ne plus dépendre d'un fournisseur d'aimants et de pouvoir fabriquer eux-mêmes, moyennant un investissement rentable, la totalité des pièces des générateurs qu'ils emploient, sans que cela porte gravement atteinte aux performances de ces générateurs.

D'autre part, dans la plupart des montres électromécaniques à affichage analogique actuelles on utilise un moteur comprenant un rotor à un seul aimant permanent bipolaire fonctionnant dans un mode pas à pas, dans un seul sens ou dans les deux sens, en effectuant des pas de 180°. Si la montre comporte une aiguille de secondes et que la fréquence des pas est de 1Hz il faut alors prévoir une démultiplication d'un facteur 30 entre le rotor du moteur et cette aiguille par un rouage qui entraîne des pertes d'énergie essentiellement dues aux frottements entre les pièces de ce rouage.

Si la montre ne comporte pas d'aiguille de secondes, l'entraînement de l'aiguille des minutes se fait par un, deux ou trois pas par minute, ce qui donne à cette aiguille un mouvement saccadé qui contraste avec le mouvement quasi-continu des montres mécaniques, plus agréable à suivre pour l'utilisateur, surtout si il est amateur de telles montres.

D'une manière générale, pour obtenir une rotation quasi-continue d'une aiguille avec un moteur à aimant permanent bipolaire, il est nécessaire d'augmenter la fréquence de fonctionnement du moteur et de prévoir un mécanisme de démultiplication entre le rotor de ce moteur et l'aiguille qu'il entraîne le plus directement, ce qui conduit inévitablement à des pertes d'énergie supplémentaires, une augmentation de pièces nécessaires et, par conséquent, une augmentation du volume du mouvement et/ou de la montre terminée et de leur coût de fabrication.

Différentes solutions ont été proposées pour résoudre au moins partiellement ce problème en utilisant des moteurs monophasés ou multiphasés à rotor multipolaire et conçus pour effectuer par exemple 60 pas par minute afin de pouvoir entraîner directement une aiguille de secondes.

Comme pour les générateurs, les rotors employés pour réaliser ces moteurs peuvent soit comporter un ensemble d'aimants bipolaires portés par un flasque, comme celui du générateur de la figure 1 et présenter évidemment les mêmes inconvénients, soit être équipé d'un aimant multipolaire formé par exemple de particules magnétiques noyées dans un liant. Cette deuxième possibilité permet d'éliminer les problèmes de montage de plusieurs aimants bipolaires sur un flasque mais pas ceux de la dépendance de l'utilisateur vis-à-vis des fabricants d'aimants spécialisés et de la répercussion du prix de revient élevé du rotor sur celui du moteur, car plus le nombre de pôles de l'aimant multipolaire est élevé et plus la taille de cet aimant est faible, plus la tête de magnétisation nécessaire pour les magnétiser devient sophistiquée et plus son coût augmente, ce qui a forcément une répercussion sur le prix des aimants.

Un autre but de la présente invention est de fournir un transducteur qui puisse fonctionner en tant que moteur pas à pas capable d'effectuer un grand nombre de pas par tour, par exemple 60 pas pour entraîner directement une aiguille de secondes de pièce d'horlogerie de petit volume, qui présente les mêmes avantages que lorsqu'il est utilisé comme générateur et ceci sans avoir à subir de modifications importantes par rapport à ce générateur.

Enfin, un autre but de l'invention est que les modifications nécessaires pour transformer le transducteur qui lui est conforme n'affecte que la structure de son stator afin que son rotor puisse être fabriqué de la même façon et de permettre ainsi à un fabricant de pièces d'horlogerie de réaliser une économie supplémentaire, notamment lors de la fabrication de montres et de mouvements à affichage analogique qui comportent à la fois un générateur et au moins un moteur pas à pas.

Ces buts sont atteints grâce au fait que dans le transducteur électromécanique selon l'invention qui comporte un rotor qui présente 2N pôles magnétiques de polarité alternée, disposés à la périphérie du rotor, N étant un nombre entier supérieur ou égal à 2 et un stator comprenant au moins deux parties polaires couplées magnétiquement à une bobine et présentant des dents statoriques disposées circulairement autour de l'axe de rotation du rotor, les 2N pôles magnétiques du rotor sont engendrés par N aimants permanents bipolaires portés par ce rotor, répartis autour de son axe de rotation et ayant tous des axes d'aimantation orientés dans un même sens par rapport à cet axe.

D'autres caractéristiques et avantages de l'invention apparaîtront à la lecture de la description qui va suivre, donnée uniquement à titre d'exemple et faite en référence au dessin annexé dans lesquels :
- la figure 1, déjà décrite, est une vue schématique en perspective d'un générateur monophasé de l'art antérieur;
- la figure 2 est une vue schématique en plan et de dessus d'une première forme d'exécution d'un transducteur monophasé selon l'invention lorsqu'il est utilisé comme générateur, cette vue correspondant à un flux mutuel maximal entre le rotor et le stator;
- la figure 3 est une vue analogue à celle de la figure 2 mais correspondant à un flux mutuel minimal entre le rotor et le stator;
- la figure 4 est une vue schématique en plan et de dessus d'une deuxième forme d'exécution d'un transducteur monophasé selon l'invention lorsqu'il est encore utilisé comme générateur et que le flux mutuel entre le rotor et le stator est maximal;
- la figure 5 est une vue en plan et de dessus du transducteur de la figure 4 dans le cas où le flux mutuel entre le rotor et le stator est minimal;
- les figures 6 et 7 sont des vues toujours en plan et de dessus de deux variantes du transducteur des figures 4 et 5;
- la figure 8 est une vue en perspective d'une forme possible de réalisation du transducteur selon l'invention lorsqu'il est utilisé comme moteur pas à pas; et
- la figure 9 est un diagramme montrant différentes courbes théoriques, pour illustrer la transformation du transducteur selon l'invention de générateur muni d'un rotor comme celui représenté aux figures 2 et 3 en un moteur pas à pas monophasé, unidirectionnel comme celui montré à la figure 8.

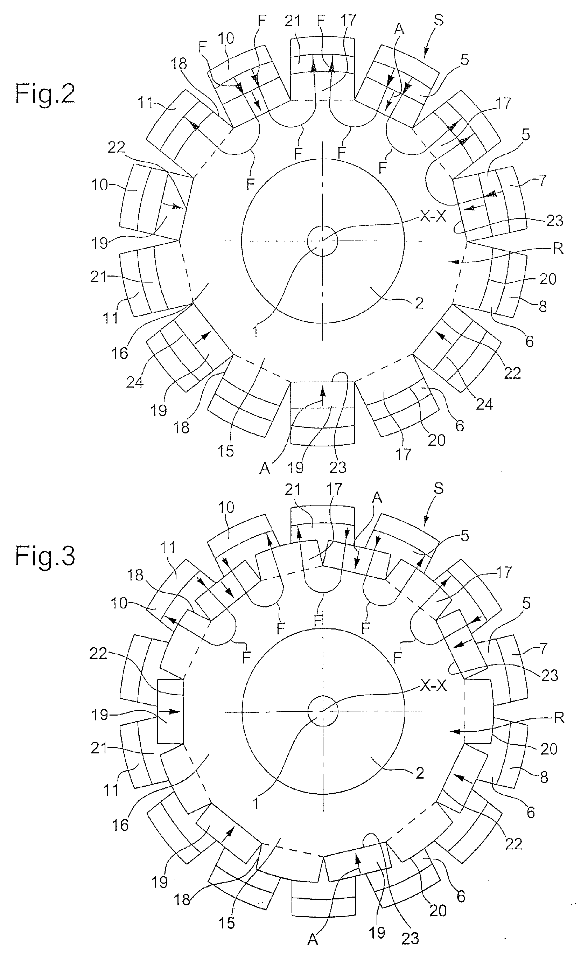

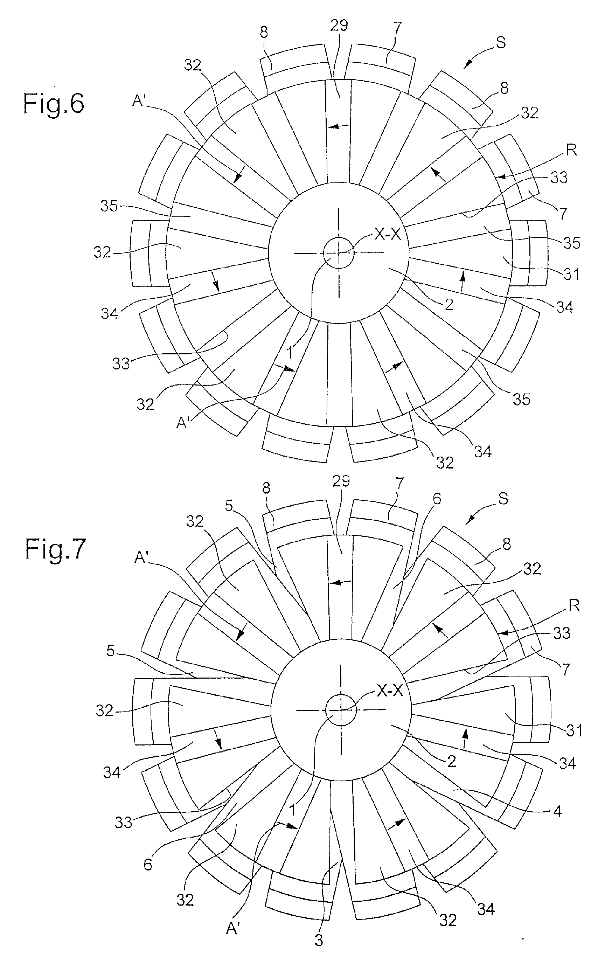

Dans les deux formes d'exécution du transducteur selon l'invention illustrées aux figures 2, 3 et 4, 5 ainsi que dans les variantes des figures 6 et 7, le stator est le même que celui du générateur de l'art antérieur représenté à la figure 1. Il serait donc inutile de le décrire à nouveau.

Toutefois et comme on pourra s'en rendre compte par la suite, cela ne signifie pas que l'invention est limitée à ce genre de stator.

Cela dit, on retrouve évidemment aux figures 2 à 7 les mêmes quatorze bras radiaux 5 et 6 des deux pièces polaires 3 et 4 du stator S (voir figure 1) avec leurs séries de dents statoriques respectives 7 et 8, alternées, disposées selon un cercle, autour de l'axe X-X de rotation du rotor R du générateur et se terminant par des extrémités 10, 11 situées sensiblement dans un même plan perpendiculaire à cet axe.

Comme dans le cas de la figure 1, le rotor R comprend un arbre 1 d'axe X-X en un matériau amagnétique qui peut être un métal, un alliage ou une matière plastique, mais ce matériau pourrait également être un matériau magnétique. Cet arbre 1 porte un pignon 2 pour pouvoir être entraîné en rotation, par exemple, par un mécanisme à masse oscillante.

Dans la forme d'exécution des figures 2 et 3 le rotor R comporte un flasque 15 solidaire de l'arbre 1, en matériau ferromagnétique de haute perméabilité magnétique, comme celui du générateur de la figure 1, c'est-à-dire, par exemple, en "Megaperm" ou "Permenorm".

Par contre, dans cette forme d'exécution, le flasque 15, présente une partie centrale 16 d'où partent sept dents rotoriques radiales 17, sensiblement de même forme et de mêmes dimensions, régulièrement réparties autour de la partie centrale 16, de façon à délimiter entre elles sept encoches 18 également de même forme et de mêmes dimensions dans lesquelles sont fixés sept aimants permanents bipolaires 19, de forme parallélépipédique et constitués d'un matériau à base de terres rares, à haute énergie spécifique, tels que le samarium-cobalt (Sm Co) ou le néodynium-fer-bore (Nd Fe B).

Plus précisément, comme le montre la figure 2, à l'aide de traits alternativement pleins et en pointillés, la partie centrale 16 du flasque 15 a la forme d'un prisme droit et plat, à quatorze faces, comme le flasque 12 du rotor de la figure 1 et chaque dent rotorique 17 celle d'un parallélépipède rectangle, excepté que sa face 20 en regard des dents statoriques 7, 8 du stator S est de préférence cylindrique et centrée sur l'axe X-X de rotation du rotor, plutôt que plane, afin de réduire l'entrefer 21 entre les dents rotoriques 17 et les dents statoriques 7, 8.

De plus grâce à cette forme prismatique de la partie centrale 16 du flasque 15 du rotor et celle quasi-parallélépipédique des dents rotoriques 17, les encoches 18 ont la forme de prismes tronconiques, à base rectangulaire avec une petite base 22 plane, ce qui permet de fixer chaque aimant bipolaire 19, de préférence par collage, à cette petite base 22 et de limiter ainsi des pertes de flux magnétique entre cet aimant et le flasque.

Pour la même raison, les aimants 19 ont de préférence des faces internes 23 de mêmes dimensions que les petites bases 22 des encoches 18 du flasque 15 et ces aimants sont fixés sur le flasque de façon que leurs faces internes coïncident sensiblement avec ces petites bases 22.

Par contre, pour des questions de fabrication les faces externes 24 des aimants 19 qui se trouvent pratiquement au même niveau que celles 20 des dents rotoriques 17 du flasque 15 ne sont pas incurvées mais planes.

Par ailleurs, comme le montrent les flèches A aux figures 2 et 3, les axes d'aimantation des aimants 19 ont une direction radiale et, conformément à l'invention, ces axes sont tous orientés dans le même sens. Tels qu'ils sont représentés sur le dessin, ces axes sont orientés vers le centre du flasque mais ils pourraient aussi l'être dans le sens inverse.

Ainsi, si comme ils sont représentés sur les figures 2 et 3, les aimants 19 ont tous des pôles Sud du côté des dents 7 et 8 du stator et des pôles Nord du côté de la partie centrale 16 du flasque 15, ils créent des pôles Nord au niveau des faces 20 des dents rotoriques 17 du flasque.

Comme cela a déjà été précisé, la figure 2 montre le rotor R dans une position où le flux mutuel entre ce rotor et le stator S est maximal, c'est-à-dire lorsque les dents 17 du flasque 16 et les aimants 19 se trouvent exactement en face des dents 7 et 8 du stator. Ce flux mutuel maximal est représenté schématiquement par les flèches F.

Au contraire, dans le cas de la figure 3, où le rotor a tourné de 1/28^{ème} de tour, c'est-à-dire lorsque le centre des faces avant des dents rotoriques 17 et par là même de celui des faces avant des aimants 19 se trouvent en face du milieu de l'espace entre deux dents statoriques adjacentes le flux mutuel entre le stator S et le rotor R est nul ou quasi-nul, comme le montrent les flèches F.

Le fait de n'utiliser que des aimants permanents ayant tous le même sens d'aimantation radial permet de fixer ces aimants sur le flasque qui les porte avant d'être magnétisés, ce qui permet une manipulation aisée et une réduction des déchets lors de l'assemblage.

Ensuite, la magnétisation des aimants se fait par le passage d'une impulsion de courant de haute intensité dans un inducteur situé autour du flasque et créant des champs magnétiques radiaux.

Cette magnétisation peut se faire en prenant un à un des flasques munis de leurs aimants et déjà montés sur des arbres de rotors ou, ce qui est plus avantageux, en empilant plusieurs flasques l'un sur l'autre et en ne fixant qu'après ces flasques sur de tels arbres.

Cela dit, la réduction de moitié du nombre d'aimants par rapport à celui du rotor R du générateur de la figure 1 diminue d'environ 50% l'amplitude du flux couplé aimant-bobine.

Toutefois cette perte peut être au moins partiellement compensée de différentes manières qui peuvent être mises en pratique séparément ou en combinaison, selon les circonstances et qui sont les suivantes :
- augmenter le nombre de spires de la bobine;
- ménager des orifices dans le flasque pour canaliser le flux des aimants permanents;
- réduire les entrefers 21 entre le rotor et le stator;
- utiliser des aimants permanents 19 de plus forte puissance, la puissance des aimants à base de terres rares disponibles actuellement sur le marché pouvant atteindre, à dimensions égales, 1.4 Tesla;
- augmenter le volume des aimants 19 en augmentant dans certaines limites leur longueur, c'est-à-dire leur dimension dans la direction radiale du rotor R, tout en gardant la même largeur pour les dents rotoriques 17 du flasque 15 ou en réduisant cette largeur; dans les deux cas la partie centrale 16 du flasque 15 serait réduite et sa forme ne serait plus celle d'un polygone régulier mais cela ne pose pas vraiment de problèmes difficiles à résoudre; par contre cela permet d'augmenter le volume des aimants et leur puissance sans augmenter les dimensions du rotor, ce qui conduirait évidemment à une augmentation du volume du générateur tout entier, ce qui se passerait si l'on se contentait d'accroître dans les mêmes proportions la largeur des aimants et celle des dents rotoriques 17 du flasque 15.

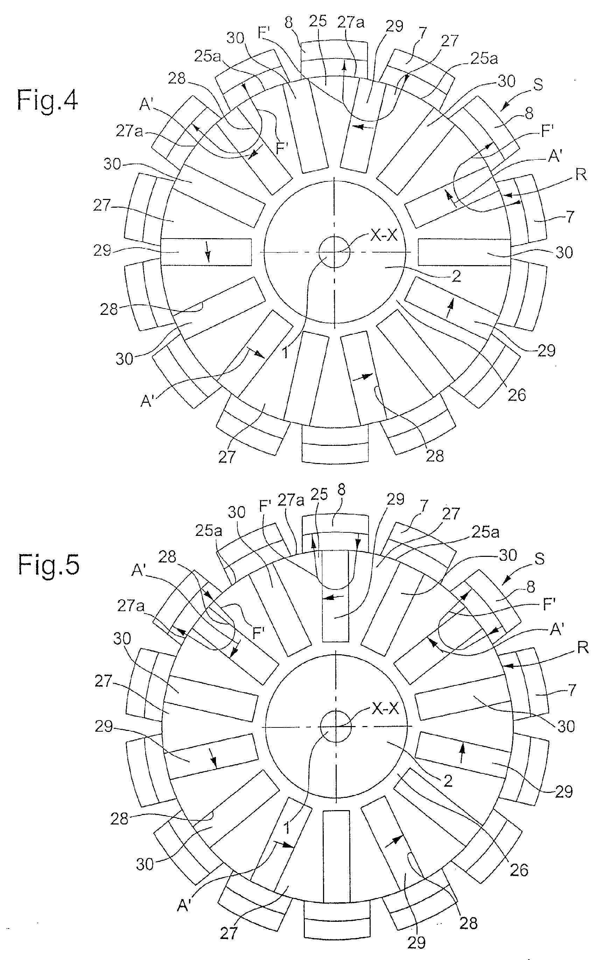

La forme d'exécution du générateur selon l'invention représentée aux figures 4 et 5 et sa variante des figures 6 et 7 permettent d'apporter une solution plus efficace à ce problème.

Sur ces figures 4 à 7 le stator S du générateur reste le même que celui des figures 1 à 3 et seule la structure du rotor R est modifiée.

Mis à part son arbre 1 avec son pignon 2 qui sont également les mêmes que dans la forme d'exécution des figures 2 et 3, le rotor R comprend un flasque 25 ayant une partie centrale 26, beaucoup plus réduite en rayon que celle des figures 2 et 3 et d'où partent quatorze dents 27 en forme de secteurs de couronne circulaire, qui délimitent entre eux quatorze encoches 28, de forme sensiblement parallélépipédique.

Dans ces encoches 28 sont fixés par chassage ou, de préférence par collage, sept aimants bipolaires 29, en alternance avec sept pièces 30 en matériau amagnétique, par exemple en résine synthétique, donc de perméabilité magnétique relative sensiblement égale à 1 et dont la longueur correspond de préférence à celle des encoches 28 dans lesquelles ils sont logés, sans toutefois dépasser cette longueur.

D'autre part, comme le montrent les flèches A' représentant leurs axes d'aimantation, tous les aimants 29 sont magnétisés tangentiellement par rapport à l'axe X-X de rotation du rotor R et dans le même sens qui peut être celui des flèches A' ou le sens inverse.

Dans ce cas, chaque aimant permanent 29 génère par le flux magnétique qu'il engendre dans le flasque 25 et au niveau des faces extérieures 27a des deux secteurs de couronne 25 qui lui sont adjacents des pôles respectivement Nord et Sud, selon l'orientation des axes d'aimantation A' des aimants 29.

Grâce à cette disposition des aimants il est possible d'augmenter notablement leur longueur et leurs surfaces perpendiculaires à leurs axes magnétiques et par conséquent la densité de flux magnétique au niveau de l'entrefer entre le rotor et le stator et le flux mutuel entre ces deux parties du générateur.

A noter toutefois que le rayon de la partie centrale 26 du flasque 25 doit être limité le plus possible afin d'éviter des courts-circuits magnétiques de chaque aimant 29 à ce niveau, mais tout en assurant une résistance mécanique suffisante du rotor à cet endroit.

Comme les figures 2 et 3 les figures 4 et 5 correspondent aux positions du rotor R par rapport au stator S pour lesquelles le flux mutuel entre ce rotor et ce stator est respectivement maximal et minimal, ce flux étant représenté schématiquement par des flèches F'.

A la figure 4, la position relative du rotor R et du stator S est telle que chaque aimant 29 et chaque pièce en matériau amagnétique 30 se trouvent en regard d'un intervalle entre deux dents statoriques voisines 7 et 8. Dans ces conditions, le flux mutuel est maximal.

En revanche, à la figure 5, chaque aimant 29 et chaque pièce en matériau amagnétique 30 sont en regard du milieu d'une dent statorique 8, respectivement 7, ce qui fait que le flux mutuel est minimal et quasi nul.

Comme pour le générateur des figures 2 et 3, il est possible de fixer préalablement les aimants 29 sur le flasque 25 avant de procéder à leur magnétisation.

Cette magnétisation peut se faire par le passage d'une impulsion de haute intensité dans un inducteur passant par le centre du flasque avec ses aimants et orienté selon l'axe qui deviendra l'axe X-X de rotation du rotor. Si l'amplitude du courant est suffisamment élevée la perméabilité relative du matériau ferromagnétique formant le flasque tend vers celle de l'air, c'est-à-dire 1 et comme les matériaux des aimants à base de terres rares comme le samarium-cobalt ou le néodynium-fer-bore possèdent par ailleurs une perméabilité relative très proche de 1, les lignes de champ magnétique produites par un inducteur axial alimenté par une impulsion de courant de forte intensité auront une orientation tangentielle et permettront de magnétiser les aimants de manière homogène.

De plus, comme pour la forme d'exécution des figures 2 et 3, la magnétisation des aimants peut se faire en série, en empilant les flasques les uns sur les autres avant leur montage sur des arbres de rotors, ce qui réduit encore davantage le prix de revient de ces derniers.

Dans la variante de la figure 6, les secteurs de couronne 27 du flasque 25 qui étaient réunis par des ponts magnétiques formés par la partie centrale 26 de ce flasque dans le cas des figures 4 et 5 sont remplacés par des secteurs de cercle 32 qui ne sont plus reliés magnétiquement mais seulement mécaniquement entre eux par l'arbre 1 du rotor. Ces secteurs de cercle 32 qui forment alors le flasque 31 du rotor R délimitent entre eux des encoches 33 de forme sensiblement parallélépipédique dans lesquelles sont logées alternativement des aimants bipolaires 34 et des pièces 35 en matériau amagnétique de forme parallélépipédique, similaires aux aimants 29 et aux pièces 30 de la forme d'exécution des figures 4 et 5.

Dans la variante de la figure 7, on retrouve les mêmes secteurs de cercle 32 du flasque 31 que dans le cas de la variante de la figure 6. La seule différence est que les pièces en matériau amagnétique 35 ont été supprimées et remplacées simplement par de l'air, comme le montrent les bras radiaux 5 et 6 des pièces polaires 3 et 4 du stator S qui sont les mêmes que ceux du générateur de la figure 1 et dont la figure 7 montre une plus grande partie.

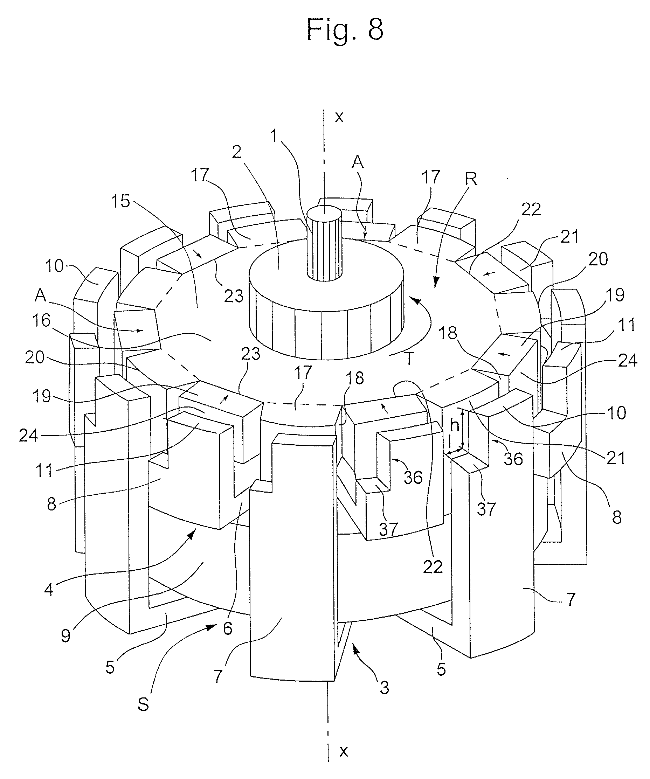

Comme cela a déjà été indiqué, la figure 8 représente en perspective une forme possible de réalisation du transducteur selon l'invention lorsqu'il peut être utilisé comme moteur pas à pas et plus précisément comme moteur pas à pas monophasé et unidirectionnel.

Si ce moteur était prévu pour entraîner directement une aiguille de secondes, à raison de 60 pas par tour, il devrait comporter 60 pôles statoriques et autant de pôles rotoriques. Toutefois, pour des questions de clarté du dessin et pour faciliter la compréhension de son fonctionnement, il ne sera décrit que comme un moteur ne comportant que 14 pôles statoriques et rotoriques, par analogie avec les formes d'exécution et les variantes du générateur selon l'invention décrites précédemment.

Tel qu'il est représenté à la figure 8, ce moteur correspond au générateur des figures 2 et 3 mais il pourrait également convenir pour la forme d'exécution des figures 4 et 5 et les variantes des figures 6 et 7.

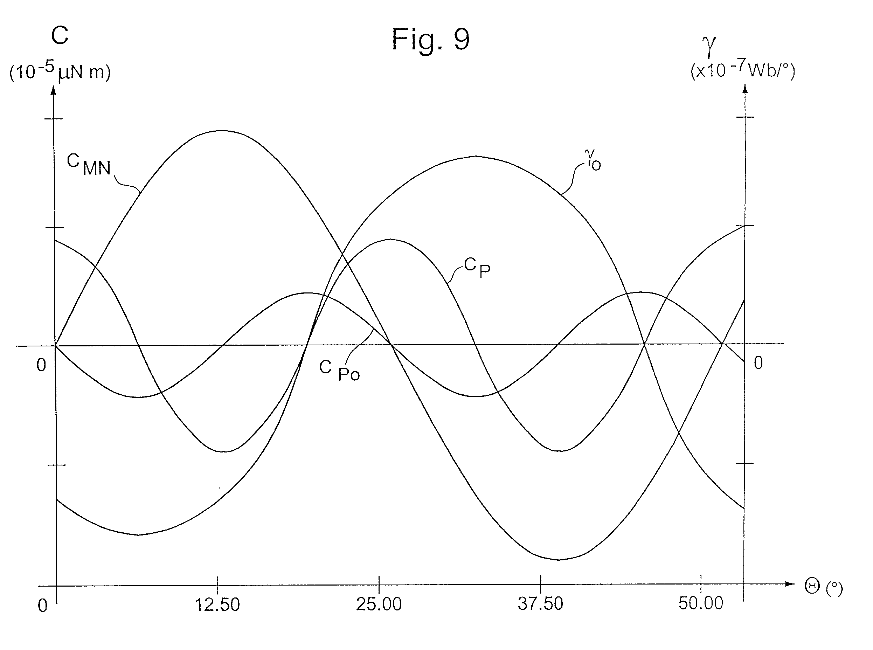

Avant de décrire cette forme d'exécution et de mieux comprendre son fonctionnement il est utile de reparler du générateur, plus généralement du transducteur de la figure 1, en se référant également à la figure 9 qui montre sur un angle θ de 2π/7, soit environ 51,43°, correspondant à deux pas polaires, le couple de positionnement théorique C_{PO} auquel est soumis le rotor R du transducteur, le couple mutuel C_{MN} également théorique auquel est soumis ce rotor lorsqu'un courant est appliqué à la bobine 9, ainsi que le facteur de couplage γ₀ lorsque la bobine n'est pas alimentée, le facteur de couplage γ étant d'une façon générale défini par le rapport entre le couple mutuel C_{MN} et le courant circulant dans cette bobine qui est égal à la dérivée du flux mutuel aimant-bobine par rapport à l'angle θ.

Sur ce diagramme l'échelle des abscisses représentant les angles de rotation du rotor est respectée mais pas celle des ordonnées représentant, d'une part, les valeurs des couples C_{PO} et C_{MN} et, d'autre part, le facteur de couplage γ₀ car ces valeurs peuvent varier d'un transducteur à un autre, même si ces transducteurs appartiennent à une même série de fabrication.

Tel qu'il est représenté à la figure 1, où la position du rotor R, prise comme origine des abscisses à la figure 9, correspond au calage des aimants 13 sur les dents statoriques et à un flux mutuel aimant-bobine maximal, le couple de positionnement C_{PO} du rotor en l'absence de courant dans la bobine qui a une période d'un pas, c'est-à-dire de π/7, soit environ 25,72°, est nul.

Pratiquement, l'amplitude et la forme de ce couple C_{PO} qui est représenté comme étant sinusoïdal à la figure 9 peut dépendre de la structure du transducteur, ce qui peut être le cas dans celui de la figure 1 où la façon de réaliser et d'assembler les deux pièces polaires 3 et 4 et le noyau de la bobine peut créer un entrefer parasite entre la pièce polaire inférieure 3 du stator S et le noyau de la bobine 9.

Si pour une raison ou pour une autre, par exemple un choc ou un champ magnétique extérieur, le rotor R est écarté de sa position stable pour laquelle l'angle θ est nul, il peut y avoir deux possibilités en fonction du couple de positionnement C_{PO} auquel il est soumis.

La première possibilité est que le rotor R soit amené dans un sens ou dans l'autre dans une position d'équilibre instable correspondant à un demi-pas polaire, soit environ 12,86°, à partir de sa position d'origine, pour laquelle après avoir été positif le couple C_{PO} redevient nul et qu'en fonction de ce couple C_{PO} il reste dans cette position ou qu'à partir de cette dernière il continue à avancer ou à reculer pour franchir un pas ou qu'il revienne à sa position initiale.

La deuxième possibilité est que suite à la perturbation auquel il a été soumis, le rotor franchisse un ou plusieurs pas en avant ou en arrière.

Si, lorsque le rotor R se trouve dans l'une de ses positions stables, un courant est appliqué à la bobine 9 du transducteur, ce courant crée un couple mutuel aimant-bobine alternatif C_{MN} qui a une période double de celle du couple de positionnement C_{PO}, c'est-à-dire celle d'un pas polaire de 2π/14, soit environ 25,72°, et ceci dans le sens opposé à celui du couple C_{PO}, ce couple mutuel étant également nul, comme le montre le diagramme de la figure 9.

Dans ces conditions, le rotor R du transducteur ne peut normalement que rester dans sa position d'équilibre stable.

Donc, pour transformer le générateur de la figure 1 en un moteur pas à pas monodirectionnel tournant dans le sens inverse des aiguilles d'une montre il faut, d'une part, déplacer le couple de positionnement du rotor R par rapport au couple mutuel aimant-bobine C_{MN} et, d'autre part, augmenter l'amplitude de ce couple de positionnement jusqu'à une valeur suffisante pour qu'il assure une position stable du rotor entre chaque pas, comme le montre la courbe C_{P} de la figure 9.

Pour cela, l'idéal est que le couple mutuel C_{MN} et le couple de positionnement C_{P} passent tous les deux par zéro lorsque l'angle θ est égale à ¾ de pas polaire, c'est-à-dire environ 19,29°, à partir de la position prise comme origine des abscisses sur la figure 9. Toutefois, pour différentes raisons, comme par exemple la façon dont est réalisé le transducteur ou l'assurance que le rotor tournera bien dans le sens voulu, quelque soit le couple résistant qu'il aura à vaincre, le passage par zéro du couple C_{MN} et/ou du couple de positionnement C_{P} peut s'écarter plus ou moins de cette position idéale de ¾ de pas polaire, à condition que ce passage par zéro reste dans certaines limites entre les deux positions successives d'équilibre instable et stable du rotor lorsque aucun courant extérieur n'est appliqué à la bobine.

Il existe différentes solutions pour déphaser et augmenter l'amplitude du couple de positionnement du rotor. Par exemple, il serait possible de fixer sur l'une au moins des dents 7 ou 8 du stator S (voir figure 1) un matériau magnétique ou un aimant de faible puissance ou encore de disposer un tel élément à proximité de cette dent.

En fait, la solution la plus simple et la plus économique consiste à pratiquer des entailles dans les dents des deux pièces polaires du stator, comme le montre la figure 8 qui, comme cela a déjà été précisé, représente un transducteur muni du même rotor R que celui des figures 2 et 3 et dont les différentes parties du stator S sont identiques à celles du générateur de la figure 1, sauf que les dents de ce stator sont munies de telles entailles. Comme, en plus, les éléments structurels de ce rotor et de ce stator qui sont identiques ou qui correspondent sont désignés par les mêmes repères, il n'est pas utile de décrire à nouveau en détail le moteur représenté à la figure 8. Il suffit de décrire ses caractéristiques propres.

Comme cela vient d'être indiqué, les dents longues 7 et courtes 8 des pièces polaires, respectivement 3 et 4 du stator S présentent toutes dans leur coin supérieur arrière 36, par rapport au sens dans lequel le rotor R doit tourner qui est indiqué par la flèche T sur la figure 8, une entaille 37 de forme rectangulaire de hauteur ou profondeur h et de largeur I.

Telles qu'elles sont représentées sur la figure 8, ces entailles ont une profondeur h et une largeur I sensiblement égales respectivement à l'épaisseur du flasque 15 du rotor et à un quart de la largeur des dents 7 et 8 du stator.

Des simulations et des calculs effectués par ordinateur ont montré qu'une profondeur h des entailles supérieure d'environ 1,2 à l'épaisseur du flasque et des entailles de largeur effectivement sensiblement égale au quart de celle des dents du stator, le couple de positionnement C_{P} était déphasé d'environ 5° par rapport au couple C_{PO}, ce qui n'est pas perceptible sur la figure 8, et que son amplitude était multipliée par environ 2,5 par rapport à celle de ce couple C_{PO}.

Les mêmes simulations et calculs ont été également montré qu'en gardant la même valeur pour la profondeur h et en doublant la largeur des entailles il n'y avait pas d'augmentation sensible du déphasage entre les couples C_{P} et C_{PO} et que l'amplitude du couple C_{P} n'était augmentée que d'à peu près 1,2 %.

Enfin, on a également pu constater qu'en gardant pour la largeur I des entailles sa valeur initiale d'un quart de celle des dents statoriques et en faisant passer la profondeur h des entailles de 1,2 à 1,5 fois l'épaisseur du flasque ne faisait qu'augmenter dans une faible mesure l'amplitude du couple C_{P}.

En conclusion, il est possible en jouant sur la profondeur et la largeur des encoches dans les dents du stator d'obtenir une amplitude du couple de positionnement C_{P} satisfaisante et un déphasage de ce couple par rapport au couple C_{PO} sinon idéal, tout au moins largement suffisant pour transformer le générateur de la figure 1 en un moteur pas à pas monodirectionnel comme celui de la figure 8.

Cela dit, il est évident que les entailles dans les dents statoriques pourraient avoir une forme autre que rectangulaire, par exemple celle d'un quart de cercle ou celle d'un triangle si ces dents étaient simplement fraisées.

Il est clair également que l'invention n'est pas limitée aux formes d'exécution et aux variantes qui ont été décrites.

Par exemple, les parties polaires du stator pourraient être planes et entourer le rotor.

Au contraire, avec des parties planes ou non, disposées de part et d'autre du rotor dans la direction de son axe de rotation les aimants bipolaires de ce rotor pourraient avoir un axe d'aimantation orienté parallèlement à cet axe de rotation.

D'autre part, l'invention peut évidemment être appliquée à des transducteurs électromécaniques ayant des stators de structures très variées et qui peuvent être non seulement monophasés mais également biphasés ou multiphasés.

## Revendications

1. Transducteur électromécanique comportant
- un rotor (R) ayant un axe de rotation (X-X) et présentant 2N pôles magnétiques de polarité alternée, disposés à la périphérie dudit rotor, N étant un nombre entier supérieur ou égal à 2, et
- un stator (S) comprenant au moins deux parties polaires (3, 4) couplées magnétiquement à une bobine (9) et présentant chacune des dents statoriques (7, 8) disposées circulairement autour dudit axe de rotation du rotor,
- **caractérisé par le fait que** lesdits 2N pôles magnétiques du rotor (R) sont engendrés par N aimants permanents bipolaires (13; 19; 29; 34) portés par ce rotor, répartis autour de son axe de rotation (X-X) et ayant tous des axes d'aimantation (A; A') orientés dans un même sens par rapport à cet axe.

2. Transducteur selon la revendication 1, **caractérisé par le fait que** le rotor (R) comprend un arbre (1) en matériau amagnétique de même axe de rotation (X-X) que le rotor et auquel est fixé, perpendiculairement à cet axe, un flasque (12; 15; 25; 31) en matériau de haute perméabilité magnétique, portant lesdits N aimants permanents bipolaires (13; 19; 29; 34) de façon à présenter lesdits 2N pôles magnétiques du rotor.

3. Transducteur selon la revendication 2, **caractérisé par le fait que** les axes d'aimantation (A) desdits aimants permanents bipolaires (13) sont orientés radialement par rapport audit axe de rotation (X-X) du rotor (R).

4. Transducteur selon la revendication 3, **caractérisé par le fait que** ledit flasque (15) présente une partie centrale (16) d'où partent N dents rotoriques radiales (17) identiques, de forme sensiblement parallélépipédique, ces dents étant régulièrement réparties autour de ladite partie centrale et formant entre elles N encoches sensiblement de même largeur qu'elles, dans lesquelles sont logés lesdits aimants permanents bipolaires (19).

5. Transducteur selon la revendication 2, **caractérisé par le fait que** les axes d'aimantation (A') desdits aimants permanents bipolaires (29; 34) sont orientés tangentiellement par rapport à l'axe de rotation (X-X) du rotor (R).

6. Transducteur selon la revendication 5, **caractérisé par le fait que** ledit flasque (25) présente une partie centrale (26) d'où partent 2N dents rotoriques identiques (27) en forme de secteurs de couronne circulaire, ces dents étant régulièrement réparties autour de ladite partie centrale et formant entre elles 2N encoches (28) de forme sensiblement parallélépipédique dans lesquelles sont logés lesdits N aimants permanents bipolaires (29) en alternance avec N pièces en matériau amagnétique (30).

7. Transducteur selon la revendication 5, **caractérisé par le fait que** ledit flasque (31) comprend 2N dents rotoriques identiques en forme de secteurs de cercle, reliées mécaniquement entre elles par l'arbre (1) du rotor (R), ces dents étant régulièrement réparties autour dudit arbre et formant entre elles 2N encoches (32) de forme sensiblement parallélépipédique, une encoche sur deux étant occupée par un aimant permanent bipolaire (34) et l'autre par un matériau amagnétique (35).

8. Transducteur selon la revendication 7, **caractérisé par le fait que** ledit matériau amagnétique est l'air.

9. Transducteur selon la revendication 1, **caractérisé par le fait que** lesdits 2N pôles magnétiques du rotor (R) sont répartis régulièrement autour dudit axe de rotation (X-X), que lesdites deux parties polaires (3, 4) du stator (S) présentent chacune N dents statoriques (7, 8) et sont disposées de façon que les 2N dents statoriques soient également réparties régulièrement autour dudit axe de rotation et que les dents (7) de l'une des parties polaires (3) alternent avec les dents (8) de l'autre partie polaire (4).

10. Transducteur selon la revendication 9, **caractérisé par le fait que** lesdites 2N dents statoriques (7, 8) sont disposées autour dudit rotor (R).

11. Transducteur selon la revendication 10, **caractérisé par le fait que** lesdites 2N dents statoriques (7, 8) sont orientées parallèlement audit axe de rotation (X-X).

12. Transducteur selon la revendication 10 ou 11, prévu pour être utilisé comme moteur pas à pas unidirectionnel, **caractérisé par le fait que** lesdites 2N dents statoriques (7, 8) comportent des moyens de positionnement (37) pour permettre audit rotor (R) d'occuper une position angulaire stable entre chacun de ses pas.

13. Transducteur selon la revendication 12, **caractérisé par le fait que** lesdits moyens de positionnement sont des entailles (37) pratiquées dans lesdites 2N dents statoriques (7, 8).
